# EUROPÄISCHE PATENTANMELDUNG

(11) **EP 2 839 913 A1**
(43) Veröffentlichungstag der Anmeldung: **25.02.2015**
(21) Anmeldenummer: 14180112.6
(22) Anmeldetag: 06.08.2014
(51) Int. Cl.: B23D 77/02, B23D 77/14

(54) **Reibahlenwerkzeug mit Spanführungselement**

(30) Priorität: 14.08.2013 DE 102013108825
(71) Anmelder: Gühring Kg, 72458 Albstadt (DE)
(72) Erfinder: Helbig, Armin, 72459 Albstadt-Magrethausen (DE)
(74) Vertreter: Spachmann, Holger

(57) **Zusammenfassung**

Die Erfindung betrifft ein Reibahlenwerkzeug (10), insbesondere zur Feinbearbeitung einer Stopfenbohrung. Das Reibahlenwerkzeug (10) umfasst einen Werkzeugträger (12) mit Einspannschaft (14) und zumindest eine an einem axialen Schneidkopfende (24) des Werkzeugträgers (12) angeordneten Schneidplatte (18). Das Schneidkopfende (24) umfasst einen Spanaufnahmeraum (26), der ausgeformt ist, Materialspäne eines zu bearbeitenden Bauteils aufzunehmen, und der durch eine die Schneidplatte (18) tragende Spanmitnahmefläche (32) und einer hierzu rechtwinklig ausgerichteten Spanführungsfläche (34), die von dem Schneidkopfende (24) in Richtung Einspannschaft (14) radial nach außen, insbesondere konkav oder abgewinkelt verläuft, begrenzt ist.

Es wird vorgeschlagen, dass an der Spanführungsfläche (34) ein Spanführungselement (56) angeordnet ist, das gegenüber der Spanmitnahmefläche (32) einen Spankorridor (44) mit einem radial verlaufenden Spanspalt (50) und einer ersten und zweiten Korridorfläche (46, 48) definiert. Die erste Korridorfläche (46) liegt in der Spanmitnahmefläche (32) und die zweite Korridorfläche (48) ist eine sich in Richtung Einspannschaft (14) erstreckende Oberfläche des Spanführungselements (56), die in einer Arbeitsdrehrichtung (52) des Werkzeugs (10) abgewinkelt oder gekrümmt verläuft, um den Spankorridor (50) in Richtung Spanaufnahmeraum (26) aufzuweiten.

## Beschreibung

Die vorliegende Erfindung betrifft ein Reibahlenwerkzeug zur Bearbeitung von Ausnehmungen und Senkungen eines zu bearbeitenden Bauteils, insbesondere eine Stufenreibahlenwerkzeug zur Bearbeitung einer Stopfenbohrung.

### STAND DER TECHNIK

Im Stand der Technik sind für Reibahlenwerkzeuge bekannt, die zur Feinbearbeitung von Bohrungen durch Reiben eingesetzt werden. Durch den Reibvorgang wird die Oberflächenqualität sowie Formmaßgenauigkeit von Bohrungen und Ausnehmungen bzw. Vertiefungen in zu bearbeitenden Bauteilen verbessert.

Üblicherweise wird eine Bohrung oder eine Ausnehmung in einem Bauteil durch einen Spiralbohrer oder ein Fräswerkzeug vorgenommen, wobei die Seitenoberfläche der Bohrung oder Vertiefung durch den mechanischen Bearbeitungsvorgang aufraut. Mittels einer Reibahle werden diese Oberflächen auf eine gewünschte Oberflächenqualität nachbearbeitet, wobei typischerweise nur wenige Zehntel Millimeter Material abgetragen werden und z.B. Toleranzen IT7 bis IT5 erreicht werden können.

Insbesondere im Motorenbau werden Wasserstopfenbohrungen vorgesehen, um kühlflüssigkeitsführende Ausnehmungen im Motorblock zur Kühlung vorzusehen. Zur Nachbearbeitung derartiger Wasserstopfenbohrungen werden ein- oder mehrstufige Reibahlenwerkzeuge eingesetzt, die eine hohe Oberflächengüte in der Bearbeitung derartiger Ausnehmungen und Bohrflächen erreichen. Typischerweise weisen Reibahlenwerkzeuge Schneiden lediglich am Umfang und in Ausnahmefällen auch am Anschnitt, d.h. am Kopfende des Werkzeugs, auf. Die Schneidkanten sind in der Regel axial gerade zur Reibahle ausgerichtet. Typische Durchmesser von Reibahlen liegen zwischen 1 bis 50 mm, wobei der Schneidkopf, der die Schneidplatten trägt, in der Regel aus Vollhartmetall (VHM) ausgebildet ist.

Seit langem sind Schneidplatten aus Diamant bekannt. In jüngster Zeit hat sich eine Ausbildung von Schneidplatten aus einem kristallinen Hartwerkstoff, insbesondere einem synthetisch hergestellten Kristallschneidwerkstoff durchgesetzt, wobei beispielsweise in der Schneidplatte Diamantpartikel in einer Metallmatrix eingebettet sind, oder eine Bornitridschneidplatte eingesetzt wird. Somit werden in vielen Fällen Diamantschneidplatten, PKD-Schneidplatten (polykristalline Diamantschneidplatten) oder CBN-Schneidplatten (kubisch kristalline Bornitridschneidplatten) eingesetzt, die durch Löten oder Schweißen auf dem Schneidkopf befestigt sind.

Im Bearbeitungsvorgang ergeben sich Materialspäne, die sich an den Schneidplatten stauen können und deren Entfernung von der Frässtelle beispielsweise mittels Kühlmittelspülung oder durch mehrfaches Herausnehmen der Reibahle aus der Bohrung und Säubern der Bohrung erfolgt. Eine zuverlässige Abfuhr von Spänen im Rahmen einer kontinuierlichen Bearbeitung und ohne aufwändige Säuberungsmaßnahmen ist mit derzeit bekannten Reibahlenwerkzeugen nur unbefriedigend gegeben.

Daher ergibt sich aus dem Stand der Technik die Aufgabe, ein Reibahlenwerkzeug bereitzustellen, das eine zuverlässige Spanabführung an den Schneidkanten ermöglicht und somit einen dauerhaften Einsatz, eine hohe Arbeitsgeschwindigkeit und eine lange Standzeit des Reibahlenwerkzeugs ermöglicht.

Diese Aufgabe wird durch ein Reibahlenwerkzeug nach dem unabhängigen Anspruch gelöst. Vorteilhafte Ausführungsformen sind Gegenstand der abhängigen Ansprüche.

### OFFENBARUNG DER ERFINDUNG

Erfindungsgemäß wird ein Reibahlenwerkzeug vorgeschlagen, das einen Werkzeugträger mit Einspannschaft umfasst, wobei zumindest eine, insbesondere mehrere an einem axialen Schneidkopfende des Werkzeugträgers angeordnete Schneidplatten vorgesehen sind. Das Schneidkopfende umfasst einen Spanaufnahmeraum, der ausgeformt ist, Materialspäne eines zu bearbeitenden Werkzeugs aufzunehmen. Der Spanaufnahmeraum ist durch eine, die Schneidplatte tragende, Spanmitnahmefläche und einer hierzu abgewinkelten, insbesondere rechtwinklig ausgerichteten Spanführungsfläche, die von dem Schneidkopfende in Richtung Einspannschaft radial nach außen, insbesondere konkav oder abgewinkelt verläuft, begrenzt.

Es wird vorgeschlagen, dass an der Spanführungsfläche ein Spanführungselement angeordnet ist, das gegenüber der Spanmitnahmefläche einen Spankorridor mit einem radial verlaufenden Spanspalt und einer ersten und zweiten Korridorfläche definiert. Die erste Korridorfläche ist von der Spanmitnahmefläche ausgebildet. Die zweite Korridorfläche ist eine sich in Richtung Einspannschaft erstreckende Oberfläche des Spanführungselements, die sich in Richtung Einspannschaft in eine Arbeitsdrehrichtung des Werkzeugs abgewinkelt oder gekrümmt erstreckt, um den Spankorridor in Richtung Spanaufnahmeraum zu erweitern.

Mit anderen Worten wir ein Reibahlenwerkzeug vorgeschlagen, das einen Spanaufnahmeraum aufweist, der sich unmittelbar hinter den Schneidplatten am Werkzeugkopfende in Richtung des Einspannschaftes erstreckt. Um Späne, die von einer Schneidkante der Schneidplatte am zu bearbeitenden Bauteil abgefräst werden, in den Spanaufnahmeraum zu transportieren, ist ein Spanführungselement im Bereich der Schneidplatte angeordnet, das gegenüber der Schneidplatte einen Spankorridor definiert. Der Spankorridor weist einen Spanspalt auf, in den Späne eindringen können. Der Spankorridor wird von zwei Spankorridorflächen definiert, wobei die erste Spankorridorfläche durch die Schneidplatte und die die Schneidplatte tragende Spanmitnahmefläche definiert ist. Die zweite Korridorfläche wird von einer Außenfläche des Spanführungselements definiert. Die zweite Korridorfläche ist derart geformt, dass sie den Spankorridor in Richtung Einspannschaft gegenüber dem Spanaufnahmeraum aufweitet. Somit wird aus Richtung des Spanaufnahmeraums ein sich verengender Trichter in Richtung Schneidkante ausgebildet, durch den von der Schneidkante abgehobelte Späne durch die Rotationsbewegung der Reibahle in Richtung Spanaufnahmeraum gedrängt und von der Schneidkante weggeführt werden. Späne werden von der Bearbeitungsstelle in den Spanaufnahmeraum abgeführt, so dass der Fräsbereich frei von Spänen bleibt, kein Spanstau auftritt und somit eine gleichbleibende hohe Qualität der Reibstelle erreicht wird. Eine erhöhte Wärmeentwicklung wird verhindert und die Standzeit des Reibahlenwerkzeugs wird erhöht.

Gemäß einer vorteilhaften Ausführungsform kann das Spanführungselement im Wesentlichen die Form eines im Umfang geviertelten Rundzylinders aufweisen, wobei zur Ausbildung der zweiten Korridorfläche eine erste Viertelungsseitenfläche des Rundzylinders schräg, konkav oder konvex geschnitten sein kann. Das Spanführungselement wird am Schneidkopfende gegenüber der Schneidplatte angeordnet und komplettiert eine im Wesentlichen kreisrunde Kontur des Schneidkopfs. Dementsprechend ist das Spanführungselement im Wesentlichen als geviertelter Rundzylinderabschnitt ausgebildet. Die von dem Schneidführungselement getragene zweite Korridorfläche weitet den Spankorridor in rückwärtiger Richtung vom Schneidkopf in Richtung Einspannschaft auf. Es bietet sich an, die zweite Korridorfläche als Schrägschnitt, Konkav- oder Konvexschnitt einer Viertelungsseitenfläche eines Rundzylinders auszubilden, um eine trichterförmige Öffnung des Spankorridors in Richtung des Spanaufnahmeraums zu erreichen. Späne, die durch den Spanspalt eindringen, werden durch die Aufweitung des Spankorridors in den Spanaufnahmeraum von der Schneidkante weggeführt.

Gemäß einer weiteren vorteilhaften Ausführungsform kann das Spanführungselement mit einer zweiten Viertelungsseitenfläche am Schneidkopfende der Spannführungsfläche angelötet oder angeschweißt sein und im Wesentlichen bündig zum Schneidkopfende ausgerichtet sein. In dieser Ausführungsform wird vorgeschlagen, dass der Werkzeugträger, der in der Regel aus einem Vollhartmetall ausgefertigt ist, nachträglich mit einem Spanführungselement ausgerüstet werden kann, wobei dieses mit einer zweiten Viertelungsseite eines Kreiszylinders an der Spanführungsfläche, die rechtwinklig zur Spanmitnahmefläche abgewinkelt ist, angelötet oder angeschweißt wird. Das nachträgliche Befestigen des Spanführungselements an einem Reibahlenwerkzeug ermöglicht eine Nachrüstung von bereits existierenden Reibahlenwerkzeugen, um die vorteilhafte Wirkung der Erfindung zu erzielen. Voraussetzung ist lediglich, dass ein bereits bekanntes Reibahlenwerkzeug einen Spanaufnahmeraum mit in der Regel senkrecht zueinander stehenden Spanmitführungs- und Spanmitnahmefläche aufweist, in den die Späne durch das Spanführungselement aufgenommen werden können.

Gemäß einer vorteilhaften Weiterbildung kann ein Spaltkantenbereich der zweiten Korridorfläche des Spanführungselements am radial äußeren Ende des Spanspalts zur Ausbildung eines Abwicklungskantenbereichs aufweitend abgewinkelt sein. Hierdurch wird der Spanspalt radial in Arbeitdrehrichtung nach außen aufgeweitet, um insbesondere am Umfang des Werkzeugs abgenommene Späne in den Spanspalt leichter eindringen zu lassen und mittels des Spankorridors der Korridorflächen in den Spanaufnahmeraum abzuführen. Ein Abwinkelungskantenbereich des Spanführungselements ist insbesondere bei Reibahlenwerkzeugen vorteilhaft, da am Außenumfang fräsende Schneidkanten große Mengen von Spänen abnehmen. Der Eintritt dieser Späne in den Spanrückführkorridor wird verbessert, ein Spanstau vermieden und die Standzeit des Werkzeugs erhöht.

In einer vorteilhaften Weiterbildung des Reibahlenwerkzeugs kann das Spanführungselement eine radial verjüngende Kopffläche am Schneidkopfende umfassen. Die radial verjüngende Kopffläche am Schneidkopfende des Spanführungselements bewirkt - ähnlich wie der Abwinkelungskantenbereich - eine verbesserte Aufnahme von Spänen in den Spankorridor, die an der Peripherie des Schneidkopfs abgenommen werden. Späne können leichter in den Spanspalt aufgenommen und in den rückwärtigen Spanaufnahmebereich transportiert werden.

Gemäß einer vorteilhaften Weiterbildung kann der Radius des Schneidkopfs in Richtung Einspannschaft erweitert sein, insbesondere stufenartig erweitert sein, wobei im radialen Erweiterungsbereich zumindest eine weitere Schneidplatte zur Ausbildung eines Stufenreibahlenwerkzeugs angeordnet ist. Diese Ausbildung schlägt ein Stufenreibahlenwerkzeug vor, mit dem Bohrungen mit verengenden Durchmessern, insbesondere versenkte Bohrungen gerieben werden können. Es bietet sich an, eine vom Schneidkopf rückwärtig versetzte weitere Schneidplatte, insbesondere in oder an der Spanmitnahmefläche des Spanaufnahmeraums anzuordnen, so dass das Reibahlenwerkzeug für verschiedene Durchmesser von Bohrungen eingesetzt werden kann und Vertiefungsbohrungen bzw. gesenkte Bohrungen reiben kann.

Gemäß der vorhergehenden Ausführungsform kann es vorteilhaft sein, im Erweiterungsbereich des Radius ein weiteres Spanführungselement anzuordnen, das einen weiteren Spaltraum definiert und eine verbesserte Rückführung von Material der weiteren Schneidplatte in den Spanaufnahmeraum ermöglicht. Somit kann eine verbesserte Spanwegführung aus dem Schneidbereich in einen Spanaufnahmeraum der am Schneidkopfende angeordneten Schneidplatten und der rückwärtig im radialen Erweiterungsbereich angeordneten Schneidplatten erreicht werden. Das Stufenreibahlenwerkzeug entfaltet die gleiche erfinderische Wirkung für axial hintereinander angeordnete Schneidplatten und verbessert die Spanabfuhr eines Mehrstufenreibahlenwerkzeugs beim Reiben von kleinen und großen Durchmessern.

Entsprechend einer vorteilhaften Weiterbildung kann die am axialen Schneidkopfende angeordnete Schneidplatte eine erste Schneidkante am axialen Schneidkopfende und eine zweite Schneidkante am Außenumfang des Schneidkopfs umfassen. Typischerweise umfasst eine Reibahlenschneidplatte eine Schneidkante am Außenumfang des Schneidkopfes, um in radialer Richtung ein Reiben bzw. Fräsen einer Bohrwand oder Vertiefungswand vorzunehmen. In dieser Ausführungsform wird vorgeschlagen, dass eine weitere erste Schneidkante am axialen Schneidkopfende angeordnet ist, um am Anschnitt, d.h. einer Bodenfläche einer Senkung zu reiben. Späne, die von der ersten und von der zweiten Schneidkante abgefräst werden, können mittels des durch das Spanführungselement definierten Spankorridors in den rückwärtigen Spanaufnahmebereich abgeführt werden, so dass die Qualität der Reiboberfläche erhöht, ein Überhitzen verhindert und die Standzeit der Schneidplatten verlängert werden kann.

Entsprechend einer vorteilhaften Weiterbildung kann am Schneidkopfende eine Hauptschneidplatte angeordnet sein, und abgewinkelt hierzu, insbesondere radial gegenüber, zumindest eine Hilfsschneidplatte angeordnet sein, wobei ein erstes Spanführungselement bezüglich der Hauptschneidplatte und ein zweites Spanführungselement bezüglich der Hilfsschneidplatte angeordnet ist. In dieser Weiterbildung wird vorgeschlagen, zumindest zwei, insbesondere radial gegenüberliegende Schneidplatten am Schneidkopfende auf Spanmitnahmeflächen anzuordnen, wobei für beide Schneidplatten separate Spanaufnahmeräume definiert sind. Jeder Schneidplatte ist ein Spanführungselement zugeordnet, das eine rückwärtige Abführung der Späne in die Spanaufnahmeräume verbessert. Die Hilfsschneidplatte kann kleiner als die Hauptschneidplatte ausgeführt sein, erhöht die Fräsgeschwindigkeit und verringert die Belastung der Fräskanten.

In einer vorteilhaften Weiterbildung kann der Schneidkopf am in Richtung Einspannschaft liegenden Ende der zweiten Korridorfläche eine spanbrechende Kante aufweisen. Die spanbrechende Kante kann durch die Außenkante der Spanführungsfläche ausgebildet sein. Langgezogene Spanfäden können nach dem Transport durch den aufweitenden Korridorspalt am Ende der zweiten Korridorfläche durch die spanbrechende Kante zerteilt werden. Kurz Späne können problemlos in dem Spanaufnahmeraum aufgenommen und durch die sich nach außen weitende Spanführungsfläche aus dem Bearbeitungsbereich entfernt werden. Die spanbrechende Kante dient somit dazu, langfädige Späne zu zerteilen, wobei kurze Späne leicht aus dem Bearbeitungsbereich entfernt werden können.

In einer weiteren Ausbildungsform kann die Schneidplatte eine PKD-Schneidplatte aus einem polykristallinen Diamantwerkstoff oder eine CBN-Schneidplatte aus einem kubisch kristallinen Bornitridwerkstoff sein, die an der Schneidaufnahmefläche angelötet oder angeschweißt, insbesondere lasergeschweißt ist. Kristalline Schneidplatten können aus einem synthetisch hergestellten, extrem harten und untereinander verwachsenen Masse von Diamantpartikeln in einer Metallmatrix oder als Bornitridkristallschneidplatten ausgebildet sein, die enorm hohen Drücke und Temperaturen standhalten und eine erheblich verlängerte Lebensdauer als herkömmliche gehärtete Stahlschneidkanten aufweisen. Im Gegensatz zu Diamantschneidkanten sind sie in der Herstellung günstiger und einfacher herzustellen, wobei eine extrem harte und verschleißfeste Schneidplatte bereitgestellt werden kann. In Kombination mit dem Spanrückführungselement kann ein Reibahlenwerkzeug bereitgestellt werden, das eine verlängerte Standzeit, höhere Arbeitsgeschwindigkeiten und ein verbessertes Bearbeitungsergebnis als konventionelle PKD-Reibahlenwerkzeuge erreicht.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: in einer perspektivischen Darstellung eine erste Ausführungsform eines Reibahlenwerkzeugs;
- **Fig. 2**: in einer Seitendarstellung die in Fig. 1 dargestellte Ausführungsform;
- **Fig. 3**: in einer perspektivischen Darstellung und einer Frontdarstellung den Schneidkopf der in Fig. 1 gezeigten Ausführungsform;
- **Fig. 4**: eine weitere Ausführungsform eines erfindungsgemäßen Reibahlenwerkzeugs;
- **Fig. 5**: in einer Seiten- und Frontdarstellung die in Fig. 4 dargestellte Ausführungsform;
- **Fig. 6**: eine perspektivische Darstellung einer weiteren Ausführungsform;
- **Fig. 7**: eine perspektivische und Seitendarstellung ein Spanrückführungselement einer Ausführungsform der Erfindung.

In den Figuren sind gleiche oder gleichartige Komponenten mit gleichen Bezugszeichen beziffert.

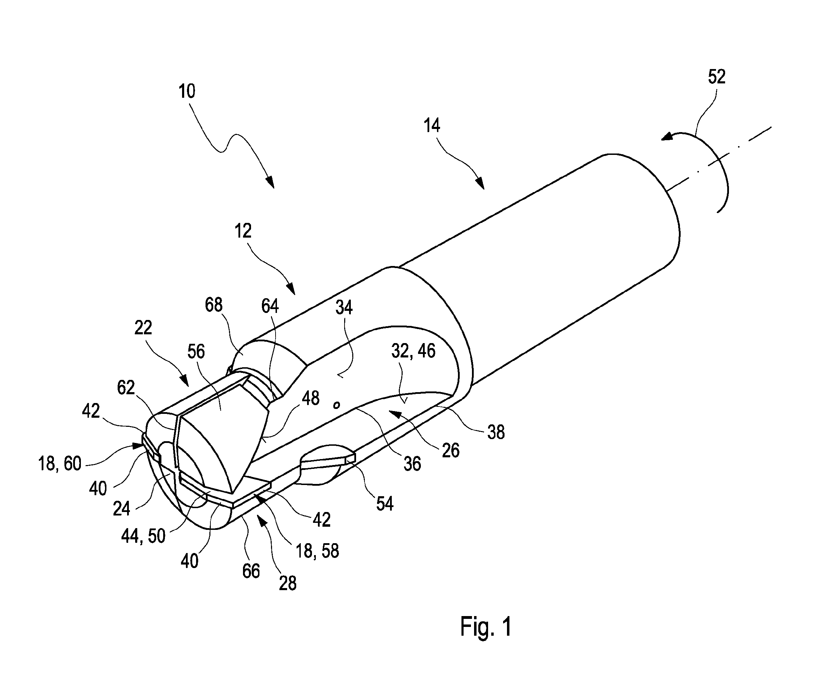

Fig. 1 zeigt in einer perspektivischen Darstellung ein erstes Ausführungsbeispiel eines Reibahlenwerkzeugs 10. Das Reibahlenwerkzeug bewegt sich rotatorisch in eine Arbeitsdrehrichtung 52. Es besteht im Wesentlichen aus einem Werkzeugträger 12 und einem Einspannschaft 14, der in einen Bohrschaft einer Arbeitsmaschine eingespannt werden kann. Der Werkzeugträger 12 umfasst einen Schneidkopf 22, der einen Schneidaufnahmeraum 26 sowie einen Schneidbereich 28 am Schneidkopfende 24 umfasst. Am Schneidkopfende 24 sind zwei Schneidplatten 18 auf Spanmitnahmeflächen 32 angelötet, die beispielsweise aus einem PKD-Material bestehen können. Jede Schneidplatte 18 weist eine Seitenschneidkante 42 zum Reiben einer Bohrungsumfangsfläche und eine Kopfschneidkante 40 zum Reiben eines Anschnitts eines Bauteils auf. Der Spanaufnahmeraum 26 wird durch die Spanmitnahmefläche 32, die die Schneidplatte 18 trägt und eine hierzu rechtwinklig abgewinkelte Spanführungsfläche 34 definiert, wobei sich die Spanführungsfläche 34 in Richtung des Einspannschafts 14 radial erweitert, um aufgenommene Späne nach außen außerhalb des Bearbeitungsbereichs abtransportieren zu können. Somit wird durch die radial erweiterte Spanführungsfläche 34 ein Abtransport der Späne vom Arbeitsbereich erreicht. Die Spanmitnahmefläche 32 wird durch eine Innenkante 36, an der die Spanführungsfläche 34 ansetzt, und eine Außenkante 38 begrenzt, an der die Schneidplattenkanten 40, 42 überstehen, begrenzt. Der Schneidbereich 28 umfasst einen Bereich, in dem die Kopfschneidkante 40 an dem Anschnittboden einer Vertiefung reibt sowie einen Umfangsbereich, in dem die Seitenschneidkante 42 eine Wandfläche einer Bohrung oder Ausnehmung reibt. Der Schneidkopf 22 umfasst einen radialen Erweiterungsbereich 68, in dem sich die Umfangsfläche des Schneidkopfs 22 stufenartig radial erweitert und an dessen Seitenkante 38 weitere, radial gegenüberliegende Schneidplatten 54 angeordnet sind, die auf der Spanmitnahmefläche 32 angebracht sind und die im radialen Erweiterungsbereich ein Reiben, beispielsweise eines Senkbereichs einer Bohrung ermöglichen. Hierdurch wird ein Stufenreibahlenwerkzeug ausgebildet, das für verschiedene Bohrungsdurchmesser eingesetzt werden kann.

Ein Spanführungselement 56 ist als Viertelschnitt eines Kreiszylinder ausgebildet, dessen erste Viertelungsfläche geschnitten ist, und der derart gegenüber der Schneidplatte 18 an die Spanführungsfläche 34 angelötet ist, dass er einen Spanspalt 44 sowie einen Spankorridor 50 mit begrenzenden ersten Korridorfläche 46 und zweiten Korridorfläche 48 definiert, durch den Späne in den Spanaufnahmeraum 26 transportiert werden können. Die Spanmitnahmefläche 32 dient als erste Korridorfläche 46 und die geschnittene Seitenfläche des Spanführungselements 56 dient als zweite aufweitende Korridorfläche 48. Am rückwärtigen Ende des Spanführungselements 56 in Richtung Einspannschaft 14 ist einen spanbrechende Kante 64 angeordnet, die langfaserige Späne bricht und hierdurch das Aufnahmevolumen des Spanaufnahmeraums 26 erhöht. Die Spanmitnahmefläche 32 und die Spanführungsfläche 34 sind in einer Innenkante 36 der Spanmitnahmefläche rechtwinklig miteinander verbunden, und an der Außenkante 38 der Spanmitnahmefläche sind im Erweiterungsbereich 68 die Schneidplatten 54 sowie am Schneidkopfende 24 die Haupt- und Hilfsschneidplatte 58, 60 angelötet.

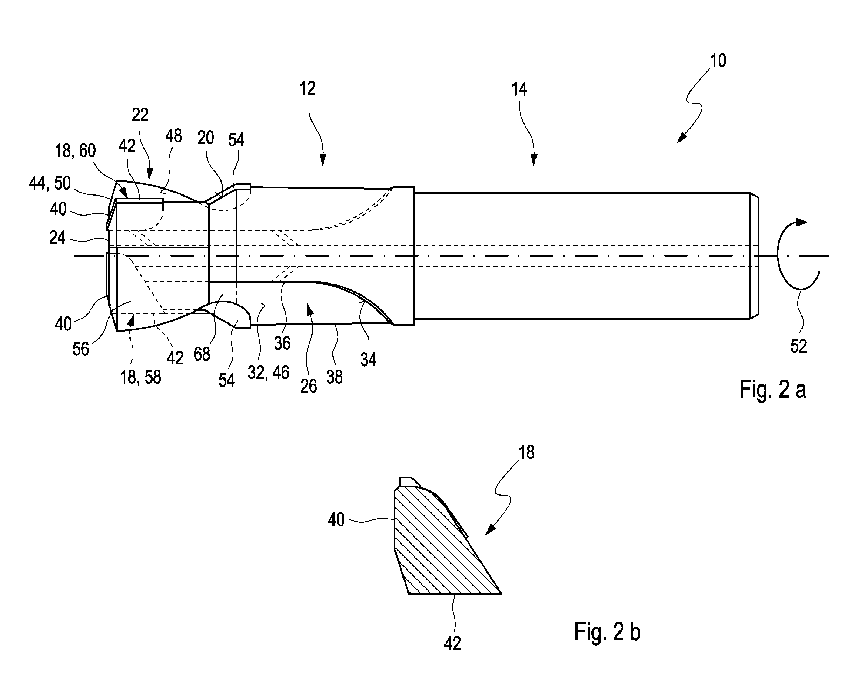

In der Fig. 2a ist eine Seitenansicht des Stufenreibahlenwerkzeugs 10 der Fig. 1 dargestellt. Deutlich ist der radial aufweitende Verlauf der Spanführungsfläche 36 erkennbar sowie die Anordnung der Haupt- und Hilfsschneidplatte 58, 60 sowie der weiteren Schneidplatten 54 mit Kopfschneidkante 40 und Seitenschneidkante 42. Die Schneidplatten 58, 60 sind auf Schneidaufnahmeflächen 20 der Spanmitnahmeflächen 32 aufgelötet. Ebenso sind die weiteren Schneidplatten 54 auf den entsprechenden Spanmitnahmeflächen 32 im radialen Erweiterungsbereich 68 aufgelötet.

Fig. 2b zeigt ein Ausführungsbeispiel einer Schneidplatte 18, die eine kopfseitige Schneidkante 40 und eine Seitenschneidkante 42 zum Reiben der Umfangsfläche des Schneidkopfs 22 aufweist. Die Schneidplatte 18 kann aus einem PKD- oder einem CBN-Material gesintert sein.

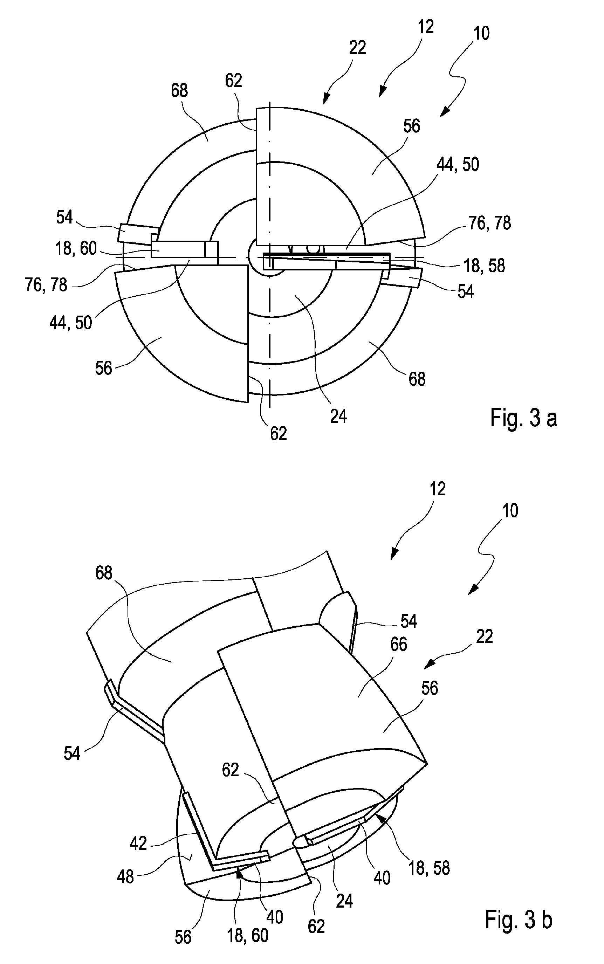

In den Figs. 3a und 3b sind eine Frontansicht und eine perspektivischen Detailansicht der Schneidkopfs 22 des in Fig. 1 dargestellten Stufenreibahlenwerkzeugs 10 gezeigt. In der Fig. 3a ist eine Ansicht der Stirnseite des Stufenreibahlenwerkzeugs 10 dargestellt, wobei die radiale Erweiterung im Erweiterungsbereich 68 des Schneidkopfs 22 erkennbar ist. Die weiteren Schneidplatten 54 sind gegenüber den radial gegenüberliegenden Haut- und Hilfsschneidplatte 58, 60 um 3 bis 10° abgewinkelt. Die Hauptschneidplatte 58 und die radial gegenüberliegende Hilfsschneidplatte 60 dienen zum Reiben von Umfangs- und Anschnittflächen einer Bohrung während axial nach hinten versetzt die beiden weiteren Schneidplatten 54a, 54b im radialen Erweiterungsbereich 68 einen größeren Durchmesser einer Bohrung bzw. einer Senkbohrung reiben können. Es sind zwei Spanführungselemente 56a, 56b jeweils gegenüberliegend der Haupt- und Hilfsschneidplatte 58, 60 angeordnet, die jeweils zwei Spankorridore 50a, 50b definieren, in denen Späne durch einen Spanspalt 44 geleitet in den Spanaufnahmeraum 26a, 26b geführt werden können.

In Fig. 3a ist erkennbar, dass die Spanführungselemente 56a, 56b radial abgewinkelte Spaltkanten 78 aufweisen, die jeweils einen in Arbeitsdrehrichtung 52 des Werkzeugs weisende Abwinkelungskantenbereich 76 umfassen, um Späne des Außenumfangs in den Spankorridor 50 aufnehmen zu können. Am Übergang vom Spanführungselement 56 zum Werkzeugträger 12 sind Spanbrechkanten 62 angeordnet, die Späne mitnehmen bzw. brechen können, um diese möglichst kleinteilig auszuformen und durch den Spankorridor 50 in den rückwärtigen Spanaufnahmeraum zu transportieren.

Wie in Fig. 3b dargestellt, weisen Haupt- und Hilfsschneidplatte 58, 60 Kopfschneidkanten 40 und Seitenschneidkanten 42 auf

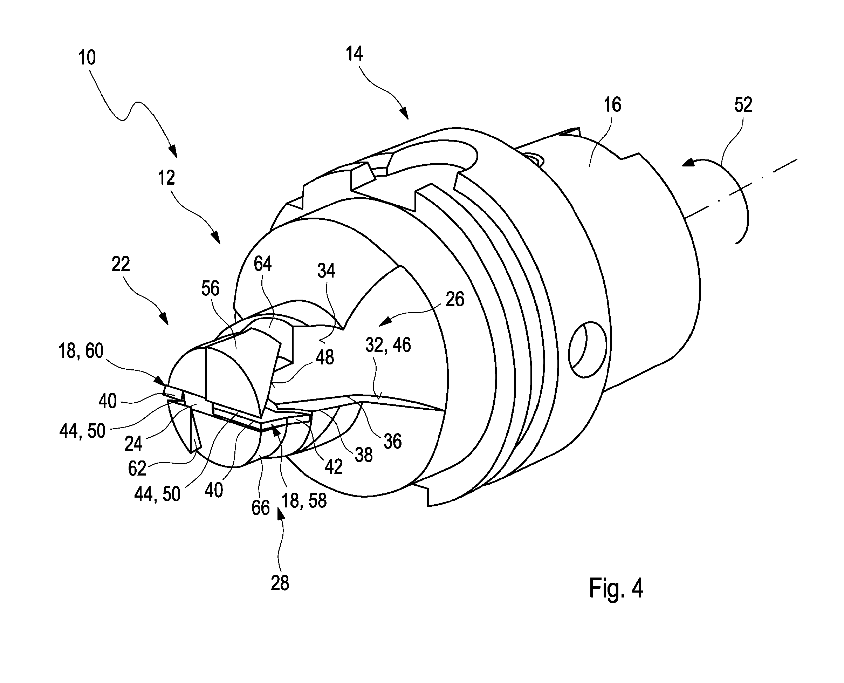

In der Fig. 4 ist eine perspektivische Darstellung einer weiteren Ausführungsform 10 eines Reibahlenwerkzeugs dargestellt, dessen Einspannschaft 14 als Hohlschaftkegel (HSK-Aufnahme) 16 ausgebildet ist. Der Werkzeugträger 12 umfasst im Wesentlichen einen Schneidkopf 22, der zwei diagonal gegenüberliegende Spanaufnahmeräume 26 umfasst, die jeweils von Spanführungsfläche 34 und Spanmitnahmefläche 32 begrenzt sind. Auf der Spanmitnahmefläche 32 sind Schneidplatten 18 angelötet, wobei eine Hauptschneidplatte 58 und radial gegenüberliegend eine Hilfsschneidplatte 60 sowohl zum Reiben des Anschnitts als auch des Umfangs des Schneidkopfes 22 vorgesehen sind. Gegenüberliegend zu den Schneidplatten 18 sind Spanführungselemente 56a, 56b angeordnet, die als Viertelrundzylinder ausgebildet sind und die jeweils einen Spankorridor 50 definieren, durch dessen Spanspalt 44 Späne in den aufweitenden Spankorridor 50 mit den beiden Korridorflächen 46 und 48 geführt und in den Spanaufnahmeraum 26 transportiert werden können. Die beiden Spanführungselemente 56 sind an den Spanführungsflächen 34 der Spanaufnahmeräume 26 angelötet und im Übergang zum Spanaufnahmeraum 26 definiert die Kante der Spanführungsfläche 34 eine Spanbrechkante 64. Der Schneidbereich 28 ermöglicht ein Reiben eines Anschnitts als auch einer Seitenfläche einer Bohrung oder einer Ausnehmung eines zu bearbeitenden Bauteils. Am Ende des Schneidkopfes 22 bilden die angelöteten Spanführungselement 56 gegenüber dem Werkzeugträger 12 spanbrechende radial ausgerichtete Kante 62 angeordnet, an denen langfaserige Späne gebrochen werden können. Alle übrigen Merkmale entsprechen der in Fig. 1 dargestellten Ausführungsform.

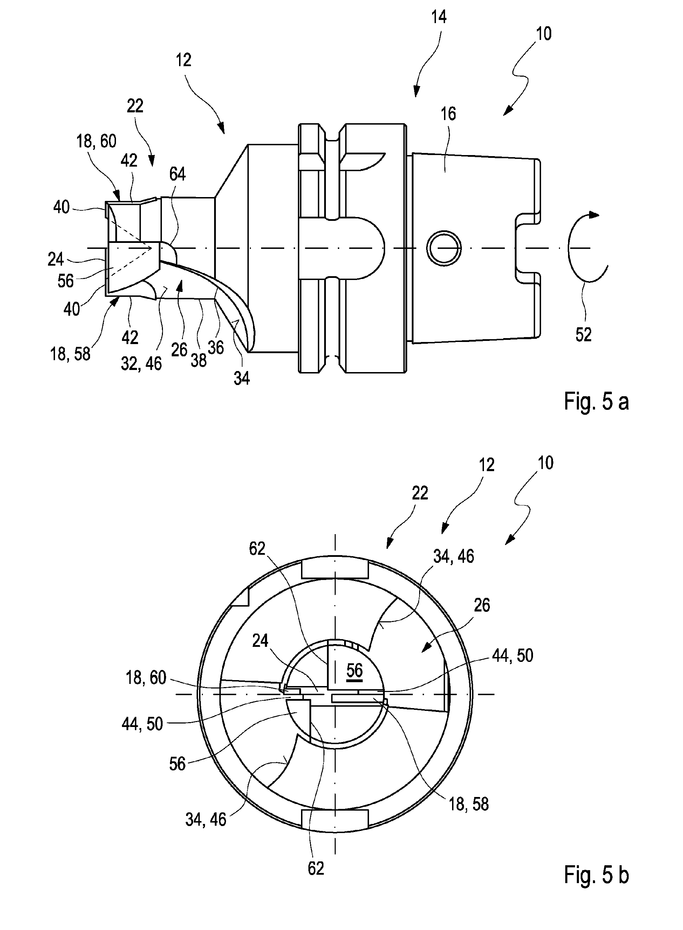

In den Figs. 5a und 5b sind sowohl eine Seitenansicht als auch eine Stirnansicht des in Fig. 4 dargestellten Reibahlenwerkzeugs 10 gezeigt. In der Fig. 5a ist insbesondere die Geometrie des Spanaufnahmeraums 26 mit gebogener Spanführungsfläche 34 gezeigt, wobei die Anordnung der Schneidplatten 58 und 60 mit den Kopf- und Seitenschneidkanten 40, 42 erkennbar sind. In diesem Fall sind die Spanführungselemente 56 kegelstumpfartig ausgebildet und mit der Spanführungsfläche 34 verlötet. In der Fig. 5b ist deutlich die Anordnung der Haupt- und Hilfsschneidplatte 58, 60 sowie die Geometrie des Spanspalts 44 gezeigt, der die Späne aufnimmt und durch den Spankorridor 50 in den rückwärtigen Spanaufnahmeraum 26 überführt.

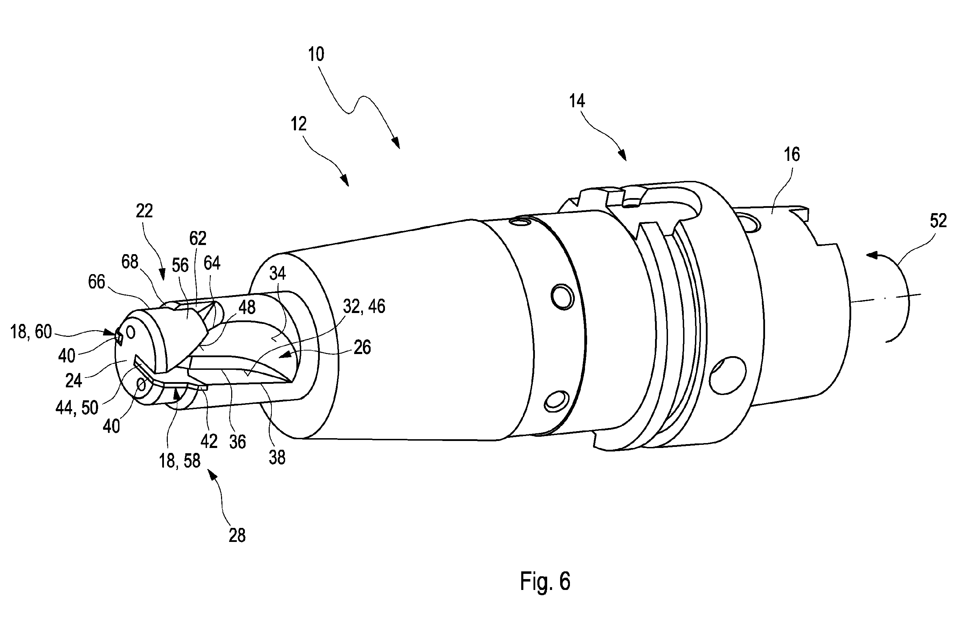

Die Fig. 6 zeigt eine weitere perspektivische Darstellung einer Ausführungsform 10 eines Stufenreibahlenwerkzeugs mit HSK-Aufnahme 16 als Einspannschaft 14 sowie mit einen Werkzeugträger 12 mit Schneidkopf 22, der wiederum eine Haupt- und eine Hilfsschneidplatte 58, 60 umfasst. Die Schneidplatten 18 sind auf einer Spanmitnahmefläche 32 aufgelötet und sind radial in einem Erweiterungsbereich 68 erweitert, um die radiale Stufe der Stufenreibahle auszubilden. Jede Schneidplatte 18, 58, 60 weist eine Kofpschneidkante 40 und Seitenschneidkante 42 auf, wobei die Seitenschneidkante 42 im Erweiterungsbereich 68 abgewinkelt zur Hauptachse des Werkzeugs verläuft. Die Spanmitnahmefläche 32 und die rechtwinklig abgewinkelte Spanführungsflächen 34 definiert den Spanaufnahmeraum 26. Die als Viertelschnitt 70 eines Kreiszylinders ausgeführten Spanführungselemente 56 weiten durch die schräg geschnittene zweite Spankorridorfläche 48 den Spankorridor 50 gegenüber den Spanaufnahmeraum 26 auf. Die Schneidplatten 18 sind in Richtung Einspannschaft 14 radial aufgeweitet, um ein Stufenreibahlenwerkzeug 10 auszubilden. Die Spanmitnahmefläche 32 weist eine Außenkante 38 sowie eine gegenüber der Spanführungsfläche 34 begrenzende Innenkante 36 auf. Die übrigen Elemente entsprechen den bereits in den Figuren 1 und 4 dargestellten Ausführungsformen.

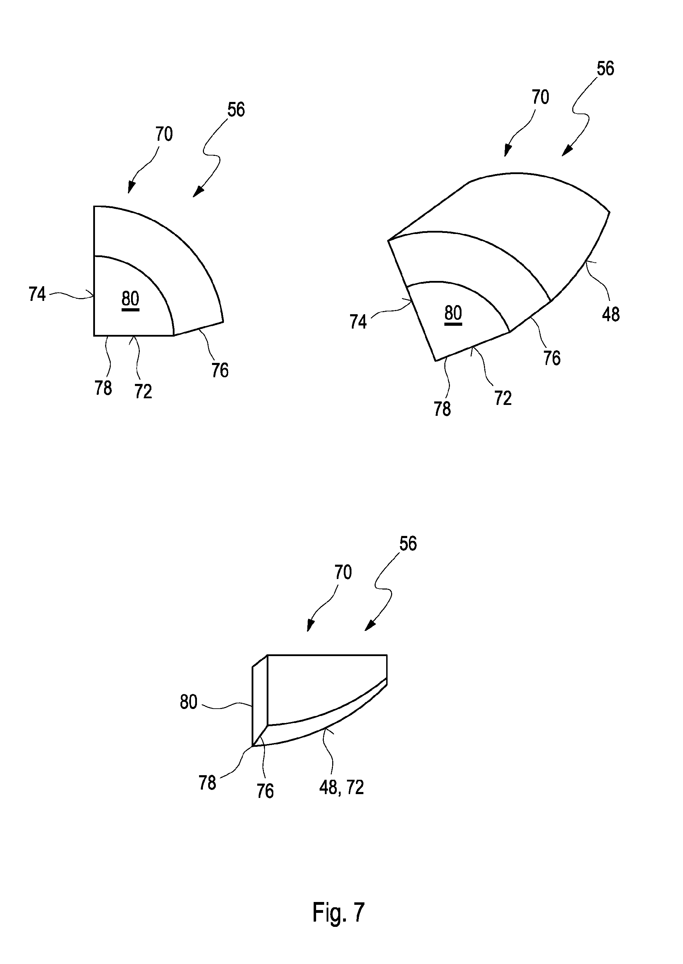

In der Fig. 7 ist sowohl perspektivisch als auch in einer Front- und Seitenansicht die Geometrie eines Ausführungsbeispiels eines Spanführungselements 56 dargestellt. Ein derartiges Spanführungselement 56 kann beispielsweise an einem Reibahlenwerkzeug nachträglich angelötet werden, um die Vorteile der Erfindung auszubilden. Das Spanführungselement 56 ist als Viertelzylinder 70 ausgebildet, der eine erste Viertelungsseitenfläche 72 und einer zweite Viertelungsseitenfläche 74 aufweist. Die zweite Viertelungsseitenfläche 74 dient als Befestigungsfläche, die an eine Spanführungsfläche 34 eines Schneidkopfes 22 angelötet oder angeschweißt werden kann. Die erste Viertelungsseitenfläche 72 kann schräg, konkav oder konvex ausgebildet sein und dient als zweite Korridorfläche 48 bzw. Spanleitfläche, um einen Spankorridor 50 in Richtung des Spanaufnahmeraums 26 auszuweiten. Das Spanführungselement 56 ist an der Kopfseite radial angefasst und weist eine verjüngte Kopffläche 80 auf, um beispielsweise Späne am radialen Außenumfang in den Spanspalt 44 zu leiten. Die die erste Viertelungsseitenfläche 72 begrenzende Spaltkante 78 ist radial in eine Arbeitsdrehrichtung 52 abgewinkelt, um einen Abwinkelungskantenbereich 76 auszubilden, durch den ebenfalls am radialen Umfangsbereich abgefräste Späne in den Spanspalt 44 des Spankorridors 50 aufgenommen werden können. Das Spanführungselement 56 kann lasergeschweißt oder gelötet an ein bevorzugt zweischneidiges Reibahlenwerkzeug befestigt werden, um einen effektiven Abtransport von Spänen in einen rückwärtigen Spanaufnahmeraum 26 zu fördern und somit die Langlebigkeit, die Bearbeitungsqualität und die Arbeitsgeschwindigkeit des Reibahlenwerkzeugs 10 zu steigern.

## Patentansprüche

1. Reibahlenwerkzeug (10), insbesondere zur Feinbearbeitung einer Stopfenbohrung, umfassend einen Werkzeugträger (12) mit Einspannschaft (14) und zumindest eine an einem axialen Schneidkopfende (24) des Werkzeugträgers (12) angeordnete Schneidplatte (18), wobei das Schneidkopfende (24) einen Spanaufnahmeraum (26) umfasst, der ausgeformt ist, Materialspäne eines zu bearbeitenden Bauteils aufzunehmen, und der durch eine die Schneidplatte (18) tragende Spanmitnahmefläche (32) und einer hierzu abgewinkelte, insbesondere rechtwinklig ausgerichtete Spanführungsfläche (34), die von dem Schneidkopfende (24) in Richtung Einspannschaft (14) radial nach außen, insbesondere konkav oder abgewinkelt verläuft, begrenzt ist, **dadurch gekennzeichnet, dass** an der Spanführungsfläche (34) ein Spanführungselement (56) angeordnet ist, das gegenüber der Spanmitnahmefläche (32) einen Spankorridor (50) mit einem radial verlaufenden Spanspalt (44) und einer ersten und zweiten in Richtung Einspannschaft (14) erstreckenden Korridorfläche (46, 48) definiert, wobei die erste Korridorfläche (46) von der Spanmitnahmefläche (32) gebildet ist und die zweite Korridorfläche (48) eine Oberfläche des Spanführungselements (56) ist, die sich in Richtung Einspannschaft (14) in einer Arbeitsdrehrichtung (52) des Werkzeugs (10) abgewinkelt oder gekrümmt erstreckt, um den Spankorridor (50) in Richtung Spanaufnahmeraum (26) aufzuweiten.

2. Reibahlenwerkzeug (10) nach Anspruch 1, **dadurch gekennzeichnet, dass** das Spanführungselement (56) im Wesentlichen die Form eines im Umfang geviertelten Rundzylinders (70) hat, wobei zur Ausbildung der zweiten Korridorfläche (48) eine erste Viertelungsseitenfläche (72) des Rundzylinders (70) schräg, konkav oder konvex geschnitten ist.

3. Reibahlenwerkzeug (10) nach Anspruch 1 oder 2, **dadurch gekennzeichnet, dass** das Spanführungselement (56) mit einer zweiten Viertelungsseitenfläche (74) am Schneidkopfende (24) der Spanführungsfläche (34) angelötet oder angeschweißt ist, und im Wesentlichen bündig zum Schneidkopfende (24) ausgerichtet ist.

4. Reibahlenwerkzeug (10) nach einem der vorhergehenden Ansprüche, **dadurch gekennzeichnet, dass** eine Spaltkante (78) der zweiten Korridorfläche (48) des Spanführungselements (56) am radialen äußeren Ende des Spanspalts (44) zur Ausbildung eines Abwinkelungskantenbereich (76) aufweitend abgewinkelt ist.

5. Reibahlenwerkzeug (10) nach einem der vorhergehenden Ansprüche, **dadurch gekennzeichnet, dass** das Spanführungselement (56) eine radial verjüngende Kopffläche (80) am Schneidkopfende (24) umfasst.

6. Reibahlenwerkzeug (10) nach einem der vorhergehenden Ansprüche, **dadurch gekennzeichnet, dass** der Radius des Schneidkopfs (22) in Richtung Einspannschaft (14) erweitert ist, insbesondere stufenartig erweitert ist, wobei im radialen Erweiterungsbereich (68) zumindest eine weitere Schneidplatte (54) zur Ausbildung eines Stufenreibahlenwerkzeugs angeordnet ist.

7. Reibahlenwerkzeug (10) nach Anspruch 6, **dadurch gekennzeichnet, dass** die weitere Schneidplatte (54) in oder an der Spanmitnahmefläche (32) angeordnet ist.

8. Reibahlenwerkzeug (10) nach Anspruch 6 oder 7, **dadurch gekennzeichnet, dass** im Erweiterungsbereich (68) ein weiteres Spanführungselement (56) angeordnet ist.

9. Reibahlenwerkzeug (10) nach einem der vorhergehenden Ansprüche, **dadurch gekennzeichnet, dass** die Schneidplatte (18) eine erste Schneidkante (40) am axialen Schneidkopfende (24) und eine zweite Schneidkante (42) am Außenumfang (66) des Schneidkopfs (22) umfasst.

10. Reibahlenwerkzeug (10) nach einem der vorhergehenden Ansprüche, **dadurch gekennzeichnet, dass** am Schneidkopfende (24) eine Hauptschneideplatte (58) angeordnet ist und abgewinkelt hierzu, insbesondere radial gegenüberliegend zumindest eine Hilfsschneideplatte (60) angeordnet ist, wobei ein erstes Spanführungselement (58a) bezüglich der Hauptschneideplatte (58) und ein zweites Spanführungselement (58b) bezüglich der Hilfsschneideplatte (60) angeordnet ist.

11. Reibahlenwerkzeug (10) nach einem der vorhergehenden Ansprüche, **dadurch gekennzeichnet, dass** der Schneidkopf (22) am in Richtung Einspannschaft (14) liegenden Ende der zweiten Korridorfläche (48) eine spanbrechende Kante (64) aufweist.

12. Reibahlenwerkzeug (10) nach einem der vorhergehenden Ansprüche, **dadurch gekennzeichnet, dass** die Schneidplatte (18, 54) eine PKD-Schneidplatte (Polykristalline Diamant Schneidplatte) oder eine CBN-Schneidplatte (Kubisch Kristalline Bornitirid-Schneidplatte) ist, die an der Schneidenaufnahmefläche (20) angelötet oder angeschweißt, insbesondere lasergeschweißt ist.
